# EUROPÄISCHE PATENTSCHRIFT

(11) **EP 1 274 743 B1**
(45) Veröffentlichungstag und Bekanntmachung des Hinweises auf die Patenterteilung: **03.03.2004**
(21) Anmeldenummer: 01927814.2
(22) Anmeldetag: 27.03.2001
(51) Int. Cl.: C08F 8/30, C08F 8/14

(54) **VERFAHREN ZUR MODIFIZIERUNG VON SÄUREGRUPPEN ENTHALTENDEN POLYMERISATEN**
METHOD FOR MODIFYING ACID GROUP CONTAINING POLYMERS
PROCEDE DE MODIFICATION DE POLYMERES CONTENANT DES GROUPES D'ACIDE

(30) Priorität: 29.03.2000 DE 10015135
(43) Veröffentlichungstag der Anmeldung: 15.01.2003
(73) Patentinhaber: BASF AKTIENGESELLSCHAFT, 67056 Ludwigshafen (DE)
(72) Erfinder: KRONER, Matthias, 67304 Eisenberg (DE); PERNER, Johannes, 67434 Neustadt (DE); BÜCHNER, Karl-Heinz, 68804 Altlussheim (DE); WILD, Jochen, 67152 Ruppertsberg (DE); PFISTER, Jürgen, 67346 Speyer (DE)
(86) Internationale Anmeldenummer: PCT/EP2001/003465
(87) Internationale Veröffentlichungsnummer: WO 2001/072853

(56) Entgegenhaltungen:
- EP-A- 0 116 930
- EP-A- 0 349 810
- WO-A-95/09821
- WO-A-97/00898
- DE-A- 4 419 568
- DE-A- 4 445 569
- FR-A- 2 590 261
- GB-A- 1 206 711
- US-A- 3 475 391
- DATABASE WPI Section Ch, Week 9301 Derwent Publications Ltd., London, GB; Class A14, AN 1987-331310 XP002174269 & JP 62 236807 A (SEKISUI PLASTICS CO., LTD.), 16. Oktober 1987 (1987-10-16)

## Beschreibung

Die Erfindung betrifft ein Verfahren zur Modifizierung von Säuregruppen enthaltenden Polymerisaten durch Reaktion von
(a) Polymeren, die mindestens 5 Gew.-% eines monoethylenisch ungesättigten Säuregruppen aufweisenden Monomeren einpolymerisiert enthalten und Molmassen von 200 bis 100.000 haben,
   mit
(b) einseitig endgruppenverschlossenen Polyalkylenglykolen, Alkylpolyalkylenglykolaminen oder deren Mischungen, sowie Mischungen aus mindestens einer der beiden genannten Verbindungen mit bis zu 30 Gew.-%, bezogen auf die Mischungen, an Ammoniak, Aminen, Alkoholen, Hydroxycarbonsäuren oder Aminocarbonsäuren
bei Temperaturen bis zu 250°C.

Aus der US-A-5840114 ist eine Zementmischung bekannt, die ein Calciumsalz und ein Copolymer enthält, das Polyalkylenoxidseitenketten enthält, die über eine Amid- oder Imid-Gruppe an die Hauptkette gebunden sind. Solche Copolymerisate werden beispielsweise durch Reaktion von Polyacrylsäure einer Molmasse von 5.000 mit einseitig endgruppenverschlossenen Polyalkylenglykolen und alkoxylierten Aminen durch Erhitzen auf Temperaturen in dem Bereich von 140 - 185°C in Gegenwart von p-Toluolsulfonsäure als Katalysator hergestellt.

Die Umsetzung von Carboxylgruppen enthaltenden Polymerisaten mit einseitig endgruppenverschlossenen Polyalkylenglykolen und Alkylpolyalkylenglykolaminen ist aus der US-A-5728207 und der WO-A-98/31643 bekannt. Die Wirksamkeit der so erhältlichen modifizierten Polymeren als Dispergiermittel für Zement ist noch verbesserungsbedürftig.

Der vorliegenden Erfindung liegt daher die Aufgabe zugrunde, besonders wirksame Dispergiermittel durch Modifizierung von Säuregruppen enthaltenden Polymeren für Zementanschlämmungen zur Verfügung zu stellen.

Die Aufgabe wird erfindungsgemäß gelöst mit einem Verfahren zur Modifizierung von Säuregruppen enthaltenden Polymerisaten durch Reaktion von
(a) Polymeren, die mindestens 5 Gew.-% eines monoethylenisch ungesättigten Säuregruppen aufweisenden Monomeren einpolymerisiert enthalten und Molmassen von 200 bis 100.000 haben, mit
(b) einseitig endgruppenverschlossenen Polyalkylenglykolen, Alkylpolyalkylenglykolaminen oder deren Mischungen, sowie Mischungen aus mindestens einer der beiden genannten Verbindungen mit bis zu 30 Gew.-%, bezogen auf die Mischungen, an Ammoniak, Aminen, Alkoholen, Hydroxycarbonsäuren oder Aminocarbonsäuren
bei Temperaturen bis zu 250°C, wenn man als Komponente (a) Polymere einsetzt, die durch radikalische Polymerisation von monoethylenisch ungesättigten Säuren, gegebenenfalls in Gegenwart von anderen monoethylenisch ungesättigten Monomeren in wäßriger Lösung in Gegenwart von mindestens 4 Gew.-%, bezogen auf die bei der Polymerisation verwendeten Monomeren, einer wasserlöslichen Schwefelverbindung erhältlich sind, in der der Schwefel die Oxidationszahl +4 hat. Solche wasserlöslichen Schwefelverbindungen sind z.B. Schwefeldioxid, schweflige Säure, Alkalimetall-, Erdalkalimetall- und Ammoniumsalze der schwefligen Säure oder der dischwefligen Säure, Natrium-, Kalium-, Calcium- oder Ammoniumformaldehydsulfoxylat, Dialkylsulfite oder deren Mischungen. Von diesen Verbindungen werden insbesondere Kalium-, Ammonium- oder Calciumsulfit, Natrium-, Kalium-, Calcium- oder Ammoniumdisulfit, Natrium-, Kalium-, Calcium- oder Ammoniumhydrogensulfit oder deren Mischungen einsetzt.

Die Polymeren der Komponente (a) sind erhältlich durch Polymerisieren von monoethylenisch ungesättigten Säuregruppen aufweisenden Monomeren. Diese Monomeren können entweder allein, in Mischung untereinander oder gegebenenfalls zusammen mit anderen monoethylenisch ungesättigten Monomeren polymerisiert werden. Außer den freien Säuregruppen enthaltenden Monomeren kann man auch die Alkalimetall-, Erdalkalimetall- oder Ammoniumsalze der Säuregruppen enthaltenden Monomeren einsetzen. Die Säuregruppen enthaltenden Monomeren können vollständig oder auch nur teilweise, z.B. zu 1 - 90 % neutralisiert sein. Geeignete Säuregruppen enthaltende Monomere sind beispielsweise Acrylsäure, Methacrylsäure, Maleinsäure, Maleinsäureanhydrid, Fumarsäure, Vinylsulfonsäure, Allylsulfonsäure, Methallylsulfonsäure, Styrolsulfonsäure, Acrylamido-2-methylpropansulfonsäure, Mischungen aus Acrylsäure und Methacrylsäure sowie Mischungen aus Acrylsäure und Methacrylsäure.

Die Säuregruppen enthaltenden Monomeren werden erfindungsgemäß im wäßrigen Medium bei Temperaturen von 80 - 150°C, vorzugsweise 20 bis 120°C in Gegenwart von wasserlöslichen Schwefelverbindungen polymerisiert, in der der Schwefel die Oxidationszahl +4 hat. Die Polymerisation kann unter Normaldruck, unter erhöhtem Druck oder auch unter vermindertem Druck durchgeführt werden. Das Arbeiten unter erhöhtem Druck bietet sich in den Fällen an, in denen leichtflüchtige Bestandteile im System verbleiben sollen, z.B. wenn man Schwefeldioxyd als Regler einsetzt oder die Polymerisation bei Temperaturen oberhalb des Siedepunktes von Wasser durchführt. Die Polymerisation erfolgt vorteilhafterweise unter einer Inertgasatmosphäre. Sie kann beispielsweise so durchgeführt werden, daß man flüssige Monomere wie Acrylsäure oder Methacrylsäure ohne Verdünnungsmittel, feste Monomere wie Maleinsäure oder Natriumvinylsulfonat sowie Initiatoren und Regler in Form von 50 - 60 Gew.-%igen wäßrigen Lösungen innerhalb von 1 - 10 Stunden so schnell in den Reaktor dosiert, daß die Polymerisationswärme in ausreichendem Maße abgeführt werden kann. Die Konzentration der Einsatzstoffe wird vorteilhaft so gewählt, daß man nach der Polymerisation 30 - 70 gew.-%ige wäßrige Lösungen der Säuregruppen enthaltenden Polymeren erhält. Die Polymeren können dabei in neutralisierter oder in teilweise neutralisierter Form vorliegen. Der pH-Wert dieser Lösung beträgt beispielsweise 1 - 7, vorzugsweise 1 bis 4.

Eine Neutralisation der Säuregruppen enthaltenden Polymeren kann während oder nach der Polymerisation durchgeführt werden. Außerdem ist es möglich, bereits teilweise oder vollständig neutralisierte säuregruppenhaltige Monomere einzusetzen. Von besonderem technischen Interesse sind die Natrium-, Kalium-, Calcium-, Magnesium- oder Ammoniumsalze der Säuregruppen enthaltenden Polymeren. In manchen Fällen ist die partielle Neutralisation der Säuregruppen enthaltenden Polymeren von Vorteil bei der Lagerung, weil teilweise neutralisierte Säuregruppen enthaltende Polymere in Wasser besser löslich sind und somit höher konzentrierte Lösungen herstellbar sind. Wenn partiell neutralisierte Säuregruppen enthaltende Polymere eingesetzt werden, beträgt der Neutralisationsgrad beispielsweise 1 - 50 Mol-%, vorzugsweise 5 - 25 Mol-% der Säuregruppen. Als Komponente (a) können jedoch auch Polycarbonsäuren in der nichtneutralisierten, d.h. in der Säureform eingesetzt werden. Falls es bei der Lagerung von hochkonzentrierten wäßrigen Polysäuren zu Ausfällungen kommen sollte, so kann man die Ausfällungen durch Verdünnen mit Wasser bzw. durch Lagern bei Temperaturen von beispielsweise 40 - 100°C in Lösung bringen. Wässrige Lösungen von Säuregruppen enthaltenden Polymeren können in der sauren, der teilneutralisierten oder der vollständig neutralisierten Form durch Verdampfen des Wassers getrocknet werden. Je nach den Trocknungsbedingungen erhält man Pulver, Granulate, Schuppen oder Pastillen.

Als Komponente (a) verwendet man beispielsweise Homo- oder Copolymerisate der Acrylsäure, Methacrylsäure, Maleinsäure, Maleinsäureanhydrid, Vinylsulfonsäure, Acrylamidomethylpropansulfonsäure, Methallylsulfonsäure oder die Alkalimetall- oder Ammoniumsalze der Polymerisate. Weitere Beispiele für Säuregruppen enthaltende Polymerisate sind Copolymerisate aus 5 - 95 Gew.-% Acrylsäure, Methacrylsäure, Maleinsäure, Vinylsulfonsäure, Acrylamidomethylpropansulfonsäure, Methallylsulfonsäure und/oder deren Alkalimetall- oder Ammoniumsalze und 95 - 5 Gew.-% Acrylsäure-, Methacrylsäure- oder Maleinsäureester von einwertigen Alkoholen mit 1 - 8 C-Atomen im Molekül. Besonders bevorzugt als Komponente (a) sind Homopolymerisate von Acrylsäure und Methacrylsäure, Copolymerisate aus Acrylsäure und Methacrylsäure, Copolymerisate aus Methacrylsäure und Vinylsulfonsäure, Copolymerisate aus Acrylsäure und Maleinsäure, Copolymerisate aus Methacrylsäure und Maleinsäure, Copolymerisate aus Acrylsäure und einem Ester einer monoethylenisch ungesättigten Carbonsäure, Copolymerisate aus Methacrylsäure und einem Ester einer monoethylenisch ungesättigten Carbonsäure sowie die Alkalimetall- oder Ammoniumsalze der genannten Copolymerisate. Die Molmasse der Polymeren der Komponente (a) beträgt 200 - 100.000, vorzugsweise 1000 bis 10.000. Besonders bevorzugt werden Homopolymerisate von Acrylsäure oder Methacrylsäure oder Copolymerisate aus Methacrylsäure und Acrylsäure.

Spezifische Beispiele für Säuregruppen enthaltende Polymere (die Prozentangaben bedeuten Gewichts-%) sind:
Polyacrylsäure mit Molgewicht 2.000,
Polyacrylsäure mit Molgewicht 4.000,
Polyacrylsäure mit Molgewicht 8.000,
Polyacrylsäure mit Molgewicht 20.000,
Copolymer aus 70 % Acrylsäure und 30 % Maleinsäure mit Molgewicht 70.000,
Copolymer aus 50 % Acrylsäure und 50 % Maleinsäure mit Molgewicht 5.000,
Copolymer aus 70 % Methacrylsäure und 30 % Maleinsäure mit Molgewicht 5.000,
Copolymer aus 70 % Acrylsäure und 30 % Methacrylsäure mit Molgewicht 10.000,
Copolymer aus 90 % Acrylsäure und 10 % Vinylsulfonsäure mit Molgewicht 10.000,
Copolymer aus 50 % Acrylsäure und 50 % Methacrylsäure mit Molgewicht 6.000,
Copolymer aus 20 % Acrylsäure und 80 % Methacrylsäure mit Molgewicht 5.000,
Copolymer aus 80 % Acrylsäure und 20 % Methacrylsäure mit Molgewicht 4.000,
Terpolymer aus 40% Acrylsäure, 40% Methacrylsäure und 20% Maleinsäure mit Molgewicht 5.000.

Als Verbindungen der Komponente (b) kommen einseitig endgruppenverschlossene Polyalkylenglykole, Alkylpolyalkylenglykolamine sowie Mischungen aus mindestens einer der genannten Verbindungen mit bis zu 30 Gew.-%, bezogen auf die Mischungen, an Ammoniak, Aminen, Alkoholen, Hydroxycarbonsäuren oder Aminocarbonsäuren in Betracht. Einseitig endgruppenverschlossene Polyalkylenglykole können beispielsweise mit Hilfe der Formeln

R¹-(O-CHR²-CHR³)ₙ-OH (I)

oder

R¹-(O-CH₂-CH₂-CH₂-CH₂)ₙ-OH (II)

dargestellt werden, wobei
- R¹ =: C₁- bis C₅₀-Alkyl,
- R², R³ =: H, Methyl oder Ethyl und
- n =: 1 bis 230 bedeuten.

Das Molgewicht der Alkylpolyalkylenglykole kann bis zu 10.000 betragen, bevorzugt ist ein Molgewicht von 200 bis 2.000 anzustreben. Dies entspricht bis zu 230, bevorzugt 3 bis 40 Alkylenoxideinheiten pro Molekül.

Beispiele für Alkylpolyalkylenglykole sind:
Methylpolyethylenglykol mit Molgewicht 350
Methylpolyethylenglykol mit Molgewicht 500
Methylpolyethylenglykol mit Molgewicht 750
Methylpolyethylenglykol mit Molgewicht 1000
Methylpolyethylenglykol mit Molgewicht 1500
Methylpolyethylenglykol mit Molgewicht 2000
Methylpolyethylenglykol mit Molgewicht 5000
Butylpolyethylenglykol mit Molgewicht 10.000
Isodecanolpolyethylenglykol mit Molgewicht 1000.

Die Alkylpolyalkylenglykole können auch Propylenoxid oder Butylenoxid allein oder in Kombination mit Ethylenoxid enthalten. Die Kombinationen können blockweise oder statistisch angeordnet sein.

Beispiele für Blockpolymere, die durch Anlagerung von zunächst Ethylenoxid an jeweils 1 Mol Methanol und anschließende Addition von Propylenoxid an das Ethylenoxidaddukt erhältlich sind, sind:
Methylpolyalkylenglykol aus 5 Mol Ethylenoxid und 1 Mol Propylenoxid
Methylpolyalkylenglykol aus 5 Mol Ethylenoxid und 3 Mol Propylenoxid
Methylpolyalkylenglykol aus 5 Mol Ethylenoxid und 10 Mol Propylenoxid
Methylpolyalkylenglykol aus 10 Mol Ethylenoxid und 1 Mol Propylenoxid
Methylpolyalkylenglykol aus 10 Mol Ethylenoxid und 3 Mol Propylenoxid
Methylpolyalkylenglykol aus 10 Mol Ethylenoxid und 10 Mol Propylenoxid
Methylpolyalkylenglykol aus 20 Mol Ethylenoxid und 1 Mol Propylenoxid
Methylpolyalkylenglykol aus 20 Mol Ethylenoxid und 3 Mol Propylenoxid
Methylpolyalkylenglykol aus 20 Mol Ethylenoxid und 10 Mol Propylenoxid
Methylpolyalkylenglykol aus 25 Mol Ethylenoxid und 1 Mol Propylenoxid
Butylalkoholalkoxylat aus 25 Mol Ethylenoxid und 3 Mol Propylenoxid
Laurylalkoholalkoxylat aus 25 Mol Ethylenoxid und 10 Mol Propylenoxid

Es kann auch Polytetrahydrofuran eingesetzt werden, das einseitig als Endgruppe z.B. eine C₁-C₄-Alkylgruppe trägt und Molmassen von 200 bis 5.000 hat.

Aus den genannten Alkylpolyalkylenglykolen können durch Aminierungsreaktionen, beispielsweise durch Umsetzung mit Ammoniak bei höheren Temperaturen und unter erhöhtem Druck und einem Katalysator aus den endständigen OH-Gruppen endständige Aminogruppen entstehen. Dabei bilden sich beispielsweise zu 80 - 100 % primäre Aminogruppen, zu 0 bis 20 Gew.-% sekundäre Aminogruppen und zu 0 bis 10 Gew.-% tertiäre Aminogruppen.

Für die Umsetzung mit den Polymeren (a) geeignete Alkylpolyalkylenglykolamine aus der Gruppe (b) können auch durch Addition von Alkylpolyalkylenglykolen an die Doppelbindung von Acrylnitril und anschließende Hydrierung der Nitrilgruppe zu einer Aminogruppe hergestellt werden.

Verbindungen der Gruppe (b) sind beispielsweise:
Methylpolyethylenglykolamin aus 3 Ethylenoxid,
Methylpolyethylenglykolamin aus 7 Ethylenoxid,
Methylpolyethylenglykolamin aus 10 Ethylenoxid,
Methylpolyethylenglykolamin aus 20 Ethylenoxid,
Methylpolyethylenglykolamin aus 30 Ethylenoxid,
Methylpolyethylenglykolamin aus 50 Ethylenoxid,
Methylpolyethylenglykolamin aus 5 Ethylenoxid und 1 propylenoxid,
Methylpolyethylenglykolamin aus 10 Ethylenoxid und 1 Propylenoxid,
Methylpolyethylenglykolamin aus 10 Ethylenoxid und 3 Propylenoxid,
Methylpolyethylenglykolamin aus 10 Ethylenoxid und 10 Propylenoxid,
Methylpolyethylenglykolamin aus 20 Ethylenoxid und 1 Propylenoxid,
Methylpolyethylenglykolamin aus 20 Ethylenoxid und 3 Propylenoxid,
Methylpolyethylenglykolamin aus 20 Ethylenoxid und 10 Propylenoxid,
Methylpolyethylenglykolamin aus 30 Ethylenoxid und 5 Propylenoxid,
Methylpolyethylenglykolamin aus 40 Ethylenoxid und 10 Propylenoxid und
Methylpolyethylenglykolamin aus 50 Ethylenoxid und 1 Propylenoxid.

Die einseitig endgruppenverschlossenen Polyethylenglykole der Formeln I und II sowie die Alkylpolyalkylenglykolamine können mit Ammoniak oder Aminen bei der Herstellung der modifizierten Säuregruppen enthaltenden Polymerisate eingesetzt werden. Geeignete Amine sind beispielsweise Alkylamine mit Molmassen bis zu 2000 oder C₃₀-Dialkylamine mit Molmassen bis zu 5000. Einzelne Beispiele für solche Amine sind Ethylamin, Butylamin, Hexylamin, Octylamin, Stearylamin, Talgfettamin und Palmitylamin. Auch langkettige Amine sind einsetzbar wie Polyisobutenamine mit Molmassen von beispielsweise 500, 1000 oder 2000. Die Fettamine können gegebenenfalls auch ungesättigt sein wie Oleylamin. Beispiele für weitere Amine sind 2-Methoxyethylamin, 2-Methoxypropylamin, 3-Methoxypropylamin, 2-Ethoxypropylamin, 3-Ethoxypropylamin, 2-(2-Methoxyethoxy)-propylamin, 3-(2-Methoxyethoxy)-propylamin. Es kommen auch alkoxylierte Alkylamine oder alkoxylierte Dialkylamine in Betracht, beispielsweise Umsetzungsprodukte von 1 Mol Oleylamin mit 20 Mol Ethylenoxid oder Umsetzungsprodukte von 1 Mol Stearylamin mit 1 Mol Ethylenoxid und 2 Mol Propylenoxid oder Umsetzungsprodukte von 1 Mol Talgfettamin mit 1 Mol Butylenoxid und 5 Mol Ethylenoxid. Auch Aminoalkohole sind in Kombination mit beispielsweise einseitig endgruppenverschlossenen Polyalkylenglykolen zur Modifizierung geeignet. Beispiele hierfür sind Ethanolamin, Diethanolamin und N,N-Dimethylethanolamin.

Außer Ammoniak und Aminen können auch Alkohole in Mischung mit einseitig endgruppenverschlossenen Polyalkylenglykolen oder Alkylpolyalkylenglykolaminen zur Modifizierung der Polymeren der Komponente (a) eingesetzt werden. Als Alkohole kommen beispielsweise C₁-C₅₀-Alkohole in Betracht. Beispiele sind Methanol, Ethanol, Isopropanol, n-Propanol, Butanol, Hexanol, Cyclohexanol, Dodecanol, Tridecanol, 2-Ethylhexylalkohol, Hexadecanol, Octadecanol, Palmitylalkohol, Stearylalkohol, Behenylalkohol und Talgfettalkohol. Man kann auch ungesättigte Alkohole wie Oleylalkohol einsetzen. Man kann natürliche Alkohole oder nach dem Ziegler-Verfahren hergestellte Alkohole oder Oxo-Alkohole einsetzen. Die Alkohole können linear oder verzweigtkettig sein.

Anstelle der Alkohole kann man in den genannten Mischungen auch Hydroxycarbonsäuren verwenden. Beispiele sind Glykolsäure, Milchsäure, Zitronensäure, Isozitronensäure, Weinsäure und Äpfelsäure. Zu dieser Gruppe von Verbindungen gehören auch Lactone wie Caprolacton.

Eine weitere Gruppe von Verbindungen, die zusammen mit einseitig endgruppenverschlossenen Polyalkylenglykolen und/oder Alkylpolyalkylenglykolaminen zur Modifizierung der Polymeren der Komponente (a) verwendet werden können, sind Aminosäuren. Beispiele für solche Verbindungen sind Glycin, Alanin, Asparaginsäure, Glutaminsäure, Glutamin, Lysin, Arginin, 4-Aminobuttersäure, 6-Aminocapronsäure, 11-Aminoundecansäure oder Lactame wie Caprolactam. Auch Taurin ist geeignet.

Beispiele für Umsetzungen der Polymeren (a) mit den Verbindungen der Gruppe (b), d.h. den einseitig endgruppenverschlossenen Polyalkylenglykolen, Alkylpolyalkylenglykolaminen oder deren Mischungen sowie Mischungen aus mindestens einer der beiden genannten Verbindungen mit bis zu 30 Gew.-%, bezogen auf die Mischungen, an Ammoniak, Aminen, Alkoholen, Hydroxycarbonsäuren oder Aminocarbonsäuren sind:
15 Gew.-% Polyacrylsäure, 80 Gew.-% Methylpolyethylenglykol und 5 Gew.-% Methylpolyethylenglykolamin
30 Gew.-% Polyacrylsäure, 65 Gew.-% Methylpolyethylenglykol und 5 Gew.-% Methylpolyethylenglykolamin
40 Gew.-% Polyacrylsäure, 55 Gew.-% Methylpolyethylenglykol und 5 Gew.-% Methylpolyethylenglykolamin
10 Gew.-% Polyacrylsäure, 70 Gew.-% Methylpolyethylenglykol und 20 Gew.-% Methylpolyethylenglykolamin
15 Gew.-% Polymethacrylsäure, 80 Gew.-% Methylpolyethylenglykol und 5 Gew.-% Methylpolyethylenglykolamin
15 Gew.-% Copolymer aus Acrylsäure und Methacrylsäure, 80 Gew.-% Methylpolyethylenglykol und 5 Gew.-% Methylpolyethylenglykolamin
15 Gew.-% Copolymer aus Acrylsäure und Maleinsäure, 80 Gew.-% Methylpolyethylenglykol und 5 Gew.% Methylpolyethylenglykolamin
15 Gew.-% Copolymer aus Methacrylsäure und Maleinsäure, 80 Gew.-% Methylpolyethylenglykol und 5 Gew.-% Methylpolyethylenglykolamin
10 Gew.-% Polyacrylsäure und 90 Gew.-% Methylpolyethylenglykol
20 Gew.-% Polyacrylsäure und 80 Gew.-% Methylpolyethylenglykol
30 Gew.-% Polyacrylsäure und 70 Gew.-% Methylpolyethylenglykol
40 Gew.-% Polyacrylsäure und 60 Gew.-% Methylpolyethylenglykol.

Es können auch 2 oder mehrere Alkylpolyalkylenglykole der Gruppe (b) zur Umsetzung mit einer oder mehreren den Polycarbonsäuren der Gruppe (a) eingesetzt werden, z.B.:
10 Gew.% Polyacrylsäure, 45 Gew.% Methylpolyethylenglykol der Molmasse 500 und 45 Gew% Methylpolyethylenglykol der Molmasse 2000
20 Gew.% Polymethacrylsäure, 30 Gew.% Methylpolyethylenglykol der Molmasse 500 und 50 Gew% Methylpolyethylenglykol der Molmasse 1000
30 Gew.% Polyacrylsäure, 20 Gew.% Methylpolyethylenglykol der Molmasse 300 und 50 Gew% Methylpolyethylenglykol der Molmasse 4000
40 Gew.% Polyacrylsäure, 10 Gew.% Methylpolyethylenglykol der Molmasse 500 und 50 Gew% Methylpolyethylenglykol der Molmasse 2000
20 Gew.% Polymethacrylsäure, 30 Gew.% Methylpolyethylenglykol der Molmasse 1000 und 50 Gew% Methylpolyethylenglykol der Molmasse 5000
20 Gew.% Copolymer aus Acrylsäure und Methacrylsäure im Gew.-Verhältnis 1:1, 30 Gew.% Methylpolyethylenglykol der Molmasse 500 und 50 Gew% Methylpolyethylenglykol der Molmasse 1000
20 Gew.% Copolymer aus Acrylsäure und Methacrylsäure im Gew.-Verhältnis 1:9, 60 Gew.% Methylpolyethylenglykol der Molmasse 500 und 20 Gew% Methylpolyethylenglykol der Molmasse 1000
20 Gew.% Copolymer aus Acrylsäure und Maleinsäure im Gew.-Verhältnis 3:7, 50 Gew.% Methylpolyethylenglykol der Molmasse 500 und 30 Gew% Methylpolyethylenglykol der Molmasse 2000
10 Gew% Polyacrylsäure, 10 Gew.% Copolymer aus Acrylsäure und Methacrylsäure im Gew.-Verhältnis 3:7, 50 Gew.% Methylpolyethylenglykol der Molmasse 500 und 30 Gew% Methylpolyethylenglykol der Molmasse 2000
20 Gew% Polymethacrylsäure, 10 Gew.% Copolymer aus Acrylsäure und Methacrylsäure im Gew.-Verhältnis 7:3, 30 Gew.% Methylpolyethylenglykol der Molmasse 500 und 50 Gew% Methylpolyethylenglykol der Molmasse 2000
10 Gew.-% Polyacrylsäure und 90 Gew.-% Methylpolyethylenglykolamin
20 Gew.-% Polyacrylsäure und 80 Gew.-% Methylpolyethylenglykolamin
30 Gew.-% Polyacrylsäure und 70 Gew.-% Methylpolyethylenglykolamin.
40 Gew.-% Polyacrylsäure und 60 Gew.-% Methylpolyethylenglykolamin
20 Gew.-% Polyacrylsäure, 74 Gew.-% Methylpolyethylenglykol, 5 Gew.-% Methylpolyethylenglykolamin und 1 Gew.-% Ammoniak
20 Gew.-% Polyacrylsäure, 75 Gew.-% Methylpolyethylenglykol, 5 Gew.-% 2-Methoxyethylamin
20 Gew.-% Polyacrylsäure, 75 Gew.-% Methylpolyethylenglykol, 5 Gew.-% 2-Methoxypropylamin
15 Gew.-% Polyacrylsäure, 80 Gew.-% Methylpolyethylenglykol, 5 Gew.-% 2-Methoxypropylamin
15 Gew.-% Polyacrylsäure, 80 Gew.-% Methylpolyethylenglykol, 5 Gew.-% 3-Methoxypropylenamin
20 Gew.-% Polyacrylsäure, 70 Gew.-% Methylpolyethylenglykol, 10 Gew.-% 3-(2-Methoxyethoxy)-propylamin und
20 Gew.-% Polyacrylsäure, 70 Gew.-% Methylpolyethylenglykol, 10 Gew.-% 2-(2-Methoxyethoxy)-propylamin

Die Molmassen für die oben beispielhaft genannten Polymeren (a) und die einseitig endgruppenverschlossenen Polyalkylenglykole bzw. Alkylpolyalkylenglykolamine (b) liegen in dem Bereich, der für die Verbindungen (a) und (b) oben angegeben ist.
Die Umsetzung der Komponenten (a) und (b) kann in Gegenwart oder auch in Abwesenheit von Katalysatoren erfolgen. Als Katalysatoren verwendet man beispielsweise Schwefelsäure, p-Toluolsulfonsäure, Benzolsulfonsäure, Methansulfonsäure, Phosphorsäure, phosphorige Säure oder Chlorwasserstoffsäure. Sofern man bei der Umsetzung eine als Katalysator wirkende Säure einsetzt, so betragen die Mengen bis zu 10 Gew.-%, vorzugsweise bis zu 5 Gew.-%, bezogen auf die Komponenten (a) und (b).

Das Gewichtsverhältnis, in dem die Verbindungen der Gruppen (a) und (b) umgesetzt werden, kann zwischen 99:1 bis 1:99 betragen. Die Komponenten (a) und (b) werden vorzugsweise im Gewichtsverhältnis 50:50 bis 5:95 und besonders bevorzugt im Gewichtsverhältnis 30:70 bis 10:90 umgesetzt.

Die Reaktion wird beispielsweise so durchgeführt, daß man die wäßrigen Lösungen der Komponente (a) gegebenenfalls mit einer als Katalysator wirkenden Säure und einer Verbindung der Komponente (b) versetzt und das Wasser abdestilliert. Die Destillation des Wassers aus der Mischung erfolgt meistens unter Atmosphärendruck, kann jedoch auch im Vakuum durchgeführt werden. Oft ist es von Vorteil, wenn während der Destillation ein Gasstrom durch die Reaktionsmischung geleitet wird, um das Wasser und andere flüchtige Anteile rascher zu entfernen. Als Gasstrom kann Luft, Stickstoff oder Wasserdampf verwendet werden. Man kann das Wasser jedoch auch unter vermindertem Druck entfernen und zusätzlich einen Gasstrom durch das Reaktionsgemisch leiten. Um das Wasser aus dem Reaktionsgemisch zu destillieren, muß man der Mischung Energie zuführen. Geeignete Apparate hierfür sind beheizbare Rührkessel, Rührkessel mit außenliegenden Wärmetauschern, Rührkessel mit innenliegenden Wärmetauschern, Dünnschichtverdampfer, Kneter oder Extruder. Das verdampfende Wasser wird über eine Brüdenleitung aus dem Reaktionsmedium abgeführt und in einem Wärmetauscher kondensiert. Es enthält nur geringe Mengen an organischen Inhaltsstoffen und kann über eine Kläranlage entsorgt werden.

Im Anschluß oder gleichzeitig mit dem Entfernen von Wasser aus dem Reaktionsgemisch tritt eine Kondensationsreaktion zwischen den Verbindungen der Komponenten (a) und (b) ein. Das dabei entstehende Wasser wird ebenfalls aus dem Reaktionsmedium entfernt. Die Modifizierung der Verbindung der Komponente (a) wird beispielsweise bei Temperaturen zwischen 100 und 250°C durchgeführt. Die Temperatur richtet sich dabei nach dem Reaktionsapparat und der Verweilzeit. Wird beispielsweise in einem kontinuierlich betriebenen Extruder oder Dünnschichtverdampfer kondensiert, in denen die Verweilzeit nur wenige Sekunden oder Minuten beträgt, kann man vorteilhafterweise Temperaturen zwischen 150 und 250°C anwenden. In diskontinuierlich betriebenen Rührkesseln oder Knetern benötigt man beispielsweise 1 - 15 Stunden und führt die Kondensation meistens in dem Temperaturbereich von 100 - 200°C durch.

In einer Verfahrensvariante kann man zunächst die Säuregruppen enthaltenden Polymeren (a) entwässern und das dabei erhaltene Pulver oder Granulat mit mindestens einer Verbindung der Komponente (b) kondensieren.

Nach der Kondensation wird das Reaktionsgemisch abgekühlt und ggf. in Wasser gelöst. Wässrige Lösungen des Reaktionsgemisches können beispielsweise so hergestellt werden, daß man Wasser zu der noch 50 - 150°C warmen Reaktionsmasse unter Rühren zufügt oder daß man die bei Temperaturen von 50 - 150°C flüssige Reaktionsmasse in Wasser einrührt. Üblicherweise wird soviel Wasser verwendet, daß man eine 20 - 95 gew.-%ige, vorzugsweise 30 - 50 gew.-%ige wässrige Lösung des Modifizierungsproduktes erhält. Gleichzeitig oder im Anschluß an das Lösen des Kondensationsprodukts kann gegebenenfalls eine Neutralisation der verbliebenen Säuregruppen erfolgen. Als Neutralisationsmittel werden Alkalimetall-, Erdalkalimetalloxide oder Hydroxide in fester Form oder in Form von 10 - 50%igen wäßrigen Lösungen oder Aufschlämmungen in Wasser verwendet. Beispiele für geeignete Basen sind Lithiumhydroxid, Natriumhydroxid, Caliumhydroxid, Calciumoxid, Calciumhydroxid, Magnesiumoxid, Magnesiumhydroxid, Aluminiumoxid und Aluminiumhydroxid. Je nach Neutralisationsgrad können die wäßrigen Lösungen der modifizierten Polycarbonsäuren pH-Werte zwischen 1 und 7 haben.

Nach der Kondensation kann die Reaktionsmasse auch unverdünnt bleiben. Beim Abkühlen unter 60°C kristallisiert sie zu einer wachsartigen Masse, die leicht wieder aufgeschmolzen werden kann. Daraus ergeben sich Variationen für den Transport. Man kann beispielsweise die Reaktionsmasse in Fässer abfüllen, aus denen das Kondensationsprodukt wieder aufgeschmolzen werden kann. Man kann es auch bei Temperaturen über 60°C, bevorzugt bei 80 bis 120°C in geschmolzenem Zustand transportieren und lagern. Dazu eignen sich beheizbare und wärmeisolierte Kesselwagen. Die Lagerung der Schmelze kann in beheizten Lagerbehältern bei 80 bis 120°C erfolgen. Es ist aber auch möglich, eine 60 - 90%ige wässrige Lösung herzustellen und zu handhaben. Die Viskositäten solcher Lösungen betragen beispielsweise 1000 bis 100.000 mPas. Durch Zugabe von 1 bis 40 Gew.-% Wasser zu der Schmelze kann die Erweichungstemperatur gesenkt werden. So schmilzt ein Kondensationsprodukt beispielsweise ohne Wasser bei 50°C, mit 5 % Wasser bei 45°C und mit 10 % Wasser schon bei 30°C. Durch Zusatz von 20 - 40 Gew.-% Wasser lassen sich die Lösungen bei 20 - 40°C gut handhaben. Diese weichmachende Wirkung des Wassers kann für die Handhabung der Schmelze von Vorteil sein. Dadurch kann die Lagertemperatur gesenkt werden. Außerdem wird die Schmelzviskosität erniedrigt.

Die wasserfreie Schmelze kann auch mit inerten Pulvern vermischt werden, um rieselfähige Kompaktate zu erhalten. Als inerte Pulver kann beispielsweise Kieselgur, Kieselgel, amorphe Kieselsäure und/oder amorphes Siliciumdioxid verwendet werden.

Die so erhältlichen wäßrigen Polymerlösungen der modifizierten Säuregruppen enthaltenden Polymeren werden beispielsweise als Dispergiermittel für Zement verwendet.

Die Prozentangaben in den Beispielen bedeuten Gew.-%. Der K-Wert der Polymerisate wurde nach H. Fikentscher, Cellulose-Chemie, Band 13, 58-64 und 71 - 74 (1932) in wäßriger Lösung bei einem pH-Wert von 7, einer Temperatur von 25°C und einer Polymerkonzentration des Natriumsalzes der Polymerisate von 1 Gew.-% bestimmt.

### Beispiele

### Herstellung von wäßrigen Polycarbonsäurelösungen

### Polycarbonsäure 1

In einem 3 Liter fassenden Polymerisationsreaktor wurden 500 g Wasser unter Durchleiten von Stickstoff auf 100°C erhitzt. Sobald das Wasser siedete, dosierte man gleichzeitig innerhalb von 6 Stunden 1200 g Acrylsäure, 300 g 40%ige wäßrige Natriumbisulfitlösung und 350 g 10%ige wäßrige Natriumperoxodisulfatlösung zu. Nach Zulaufende wurde das Reaktionsgemisch noch für eine weitere Stunde nachpolymerisiert und dann durch Zugabe von 200 g 50%iger wäßriger Natronlauge eine wäßrige Lösung von teilweise neutralisierter Polyacrylsäure hergestellt. Das Molgewicht der Polyacrylsäure betrug 4000. Der Feststoffgehalt der Polymerlösung wurde durch Verdünnen mit Wasser auf 50 % eingestellt.

### Polycarbonsäure 2

In einem 4 Liter fassenden Reaktor wurden 1600 g Wasser unter Durchleiten von Stickstoff auf 100°C erhitzt. Sobald das Wasser zu sieden begann, dosierte man gleichzeitig innerhalb von 7 Stunden 570 g Acrylsäure, 680 g Methacrylsäure, 250 g 40%ige Natriumbisulfitlösung und 500 g 10%ige Natriumperoxodisulfatlösung zu. Nach Zulaufende polymerisierte man das Reaktionsgemisch noch für eine weitere Stunde durch Erhitzen auf 100°C. Die Polycarbonsäure hatte eine Molmasse von 5500 und einen K-Wert von 31. Der Feststoffgehalt der wäßrigen Polymerlösung betrug 38 %.

### Beispiel 1

In einem 2 Liter fassenden Reaktor mit Ankerrührer wurden 250 g der 50%igen wäßrigen Polycarbonsäure 1 vom Molgewicht 4000, 6 g konzentrierte Schwefelsäure, 50 g Methylpolyethylenglykolamin mit Molgewicht 500 und 550 g Methylpolyethylenglykol mit Molmasse 1000 vorgelegt. Man destillierte anschließend das Wasser im Vakuum bei 50 mbar ab. Dann wurde die Temperatur auf 180°C erhöht und die Kondensation für 5 Stunden im Vakuum durchgeführt. Nach Beendigung der Kondensation kühlte man die Reaktionsmasse auf 90°C ab und gab 900 g Wasser und 5 g 50%ige wäßrige Natronlauge zu. Man erhielt eine 40%ige wäßrige Polymerlösung. Das Molgewicht Mw der modifizierten Polyacrylsäure betrug 23.000. Die modifizierte Polyacrylsäure hatte einen K-Wert von 23.

### Beispiel 2

250 g der Polycarbonsäure 1 wurden mit 20 g 25%iger wäßriger Ammoniaklösung, 550 g Methylpolyethylenglykol mit Molmasse 1000 und 6 g konzentrierter Schwefelsäure versetzt. Anschließend kondensierte man die Mischung wie in Beispiel 1 beschrieben und stellte durch Zugabe von Wasser und Natronlauge eine 40%ige wäßrige Lösung der modifizierten Polyacrylsäure mit einer Molmasse von 25.000 her. Der K-Wert der modifizierten Polyacrylsäure betrug 24.

### Beispiel 3

Beispiel 2 wurde mit dem Unterschied wiederholt, daß man die Kondensation in Abwesenheit von Ammoniak durchführte. Man erhielt eine 40%ige wäßrige Polymerlösung. Das Molgewicht der modifizierten Polyacrylsäure betrug 20.000, der K-Wert 23.

### Beispiel 4

Beispiel 2 wurde mit dem Unterschied wiederholt, daß man anstelle von Ammoniak 50 g n-Butylamin einsetzte. Die modifizierte Polycarbonsäure 1 hatte eine Molmasse von 20.000 und einen K-Wert von 24.

### Beispiel 5

In einem 2 Liter fassenden Reaktor wurden 300 g der Polycarbonsäure 2 mit 600 g Methylpolyethylenglykol einer Molmasse von 1000 und 10 g konzentrierter Schwefelsäure versetzt, unter Abdestillieren von Wasser auf 160°C erhitzt und für 4 Stunden bei dieser Temperatur kondensiert. Nach dem Abkühlen und Verdünnen auf einen Feststoffgehalt von 40%, neutralisierte man das Reaktionsgemisch partiell durch Zugabe von 10 g 50%iger wäßriger Natronlauge. Die modifizierte Polyacrylsäure hatte eine Molmasse von 28.000 und einen K-Wert von 32.

### Beispiel 6

Beispiel 5 wurde wiederholt mit dem Unterschied, daß man anstelle von Methylpolyethylenglykol 400 g Methylpolyethylenglykolamin mit einer Molmasse von 500 einsetzte. Die modifizierte Polycarbonsäure hatte eine Molmasse von 22.000 und einen K-Wert von 27.

## Patentansprüche

1. Verfahren zur Modifizierung von Säuregruppen enthaltenden Polymerisaten durch Reaktion von
(a) Polymeren, die mindestens 5 Gew.-% eines monoethylenisch ungesättigten Säuregruppen aufweisenden Monomeren einpolymerisiert enthalten und Molmassen von 200 bis 100.000 haben, mit
(b) einseitig endgruppenverschlossenen Polyalkylenglykolen, Alkylpolyalkylenglykolaminen oder deren Mischungen, sowie Mischungen aus mindestens einer der beiden genannten Verbindungen mit bis zu 30 Gew.-%, bezogen auf die Mischungen, an Ammoniak, Aminen, Alkoholen, Hydroxycarbonsäuren oder Aminocarbonsäuren
bei Temperaturen bis zu 250°C, **dadurch gekennzeichnet, daß** man als Komponente (a) Polymere einsetzt, die durch radikalische Polymerisation von monoethylenisch ungesättigten Säuren, gegebenenfalls in Gegenwart von anderen monoethylenisch ungesättigten Monomeren in wäßriger Lösung in Gegenwart von mindestens 4 Gew.-%, bezogen auf die bei der Polymerisation verwendeten Monomeren, einer wasserlöslichen Schwefelverbindung erhältlich sind, in der der Schwefel die Oxidationszahl +4 hat.

2. Verfahren nach Anspruch 1, **dadurch gekennzeichnet, daß** man als wasserlösliche Schwefelverbindungen Schwefeldioxid, schweflige Säure, Alkalimetall-, Erdalkalimetall- und Ammoniumsalze der schwefligen Säure oder der dischwefligen Säure, Natrium-, Kalium- oder Ammoniumformaldehydsulfoxylat, Dialkylsulfite oder deren Mischungen einsetzt.

3. Verfahren nach Anspruch 1 oder 2, **dadurch gekennzeichnet, daß** man als wasserlösliche Schwefelverbindungen Natrium-, Kaliumoder Ammoniumsulfit, Natrium-, Kalium-, Calcium- oder Ammoniumdisulfit, Natrium-, Kalium-, Calcium- oder Ammoniumhydrogensulfit oder deren Mischungen einsetzt.

4. Verfahren nach einem der Ansprüche 1 bis 3, **dadurch gekennzeichnet, daß** man die wasserlöslichen Schwefelverbindungen in Mengen von 4 bis 15 Gew.-%, bezogen auf die bei der Polymerisation verwendeten Monomeren, einsetzt.

5. Verfahren nach einem der Ansprüche 1 bis 4, **dadurch gekennzeichnet, daß** man als Verbindungen der Komponente (a) Homooder Copolymerisate der Acrylsäure, Methacrylsäure, Maleinsäure, Maleinsäureanhydrid, Vinylsulfonsäure, Acrylamidomethylpropansulfonsäure, Methallylsulfonsäure oder die Alkalimetall- oder Ammoniumsalze der genannten Monomeren einsetzt.

6. Verfahren nach einem der Ansprüche 1 bis 5, **dadurch gekennzeichnet, daß** man als Komponente (a) Copolymerisate aus 5 bis 95 Gew.-% Acrylsäure, Methacrylsäure, Maleinsäure, Maleinsäureanhydrid, Vinylsulfonsäure, Acrylamidomethylpropansulfonsäure, Methallylsulfonsäure und/oder deren Alkalimetall- oder Ammoniumsalze und 95 bis 5 Gew.-% Acrylsäure-, Methacrylsäure- oder Maleinsäureester von einwertigen Alkoholen mit 1 bis 8 C-Atomen im Molekül einsetzt.

7. Verfahren nach einem der Ansprüche 1 bis 6, **dadurch gekennzeichnet, daß** man als Komponente (a) Homopolymerisate von Acrylsäure, Homopolymerisate von Methacrylsäure, Copolymerisate aus Acrylsäure und Methacrylsäure, Copolymerisate aus Methacrylsäure und Vinylsulfonsäure, Copolymerisate aus Acrylsäure und Maleinsäure, Copolymerisate aus Methacrylsäure und Maleinsäure, Copolymerisate aus Acrylsäure und einem Ester einer monoethylenisch ungesättigten Carbonsäure, Copolymerisate aus Methacrylsäure und einem Ester einer monoethylenisch ungesättigten Carbonsäure sowie die Alkalimetalloder Ammoniumsalze der genannten Copolymerisate.

8. Verfahren nach einem der Ansprüche 1 bis 7, **dadurch gekennzeichnet, daß** die Molmasse der Polymeren der Komponente (a) 1 000 bis 10 000 beträgt.

9. Verfahren nach einem der Ansprüche 1 bis 8, **dadurch gekennzeichnet, daß** man als Komponente (a) Homopolymerisate von Acrylsäure oder Methacrylsäure oder Copolymerisate aus Methacrylsäure und Acrylsäure einsetzt.

10. Verf ahren nach einem der Ansprüche 1 bis 9, **dadurch gekennzeichnet, daß** man als Komponente (b) einseitig endgruppenverschlossene Polyalkylenglykole Verbindungen der Formeln
R¹-O-(CHR²-CHR³-O)ₙH (I)
oder
R¹-O-(CH₂-CH₂-CH₂-CH₂-O)ₙ-H (II)
einsetzt, worin
R¹ = C₁- bis C₅₀-Alkyl,
R², R³ = H, Methyl oder Ethyl und
n = 1 bis 100 ist.

11. Verfahren nach einem der Ansprüche 1 bis 10, **dadurch gekennzeichnet, daß** man als Verbindungen der Komponente (b) Methylpolyethylenglykole oder Ethylenoxid- und Propylenoxideinheiten enthaltende Methylpolyalkylenglykole mit Molmassen von jeweils 200 bis 10 000 einsetzt.

## Claims

1. A process for modifying polymers containing acid groups by reaction of
(a) polymers comprising at least 5% by weight of a copolymerized monoethylenically unsaturated monomer containing acid groups and having molar masses of from 200 to 100 000 with
(b) polyalkylene glycols which are end-capped at one end, alkylpolyalkylene glycol amines or mixtures thereof, or mixtures of at least one of the two compounds specified with up to 30% by weight, based on the mixtures, of ammonia, amines, alcohols, hydroxycarboxylic acids or aminocarboxylic acids
at up to 250°C, wherein the polymers used as component (a) are ones which are obtainable by free-radical polymerization of monoethylenically unsaturated acids in aqueous solution in the presence or absence of other monoethylenically unsaturated monomers and in the presence of at least 4% by weight, based on the monomers used in the polymerization, of a water-soluble sulfur compound in which the sulfur is in the oxidation state +4.

2. A process as claimed in claim 1, wherein the water-soluble sulfur compound used is sulfur dioxide, sulfurous acid, an alkali metal, alkaline earth metal or ammonium salt of sulfurous acid or of disulfurous acid, a sodium, potassium or ammonium formaldehyde sulfoxylate, a dialkyl sulfite or a mixture thereof.

3. A process as claimed in claim 1 or 2, wherein the water-soluble sulfur compound used is sodium, potassium or ammonium sulfite, sodium, potassium, calcium or ammonium disulfite, sodium, potassium, calcium or ammonium hydrogensulfite or a mixture thereof.

4. A process as claimed in any of claims 1 to 3, wherein the water-soluble sulfur compound is used in an amount of from 4 to 15% by weight, based on the monomers used in the polymerization.

5. A process as claimed in any of claims 1 to 4, wherein the compounds used in component (a) are hompolymers or copolymers of acrylic acid, methacrylic acid, maleic acid, maleic anhydride, vinylsulfonic acid, acrylamidomethylpropanesulfonic acid, methallylsulfonic acid or alkali metal or ammonium salts of the monomers specified.

6. A process as claimed in any of claims 1 to 5, wherein the component (a) used comprises copolymers of from 5 to 95% by weight of acrylic acid, methacrylic acid, maleic acid, maleic anhydride, vinylsulfonic acid, acrylamidomethylpropanesulfonic acid, methallylsulfonic acid and/or their alkali metal or ammonium salts and from 95 to 5% by weight of acrylic, methacrylic or maleic esters of monohydric alcohols having 1 to 8 carbon atoms in the molecule.

7. A process as claimed in any of claims 1 to 6, wherein the component (a) used comprises homopolymers of acrylic acid, homopolymers of methacrylic acid, copolymers of acrylic acid and methacrylic acid, copolymers of methacrylic acid and vinylsulfonic acid, copolymers of acrylic acid and maleic acid, copolymers of methacrylic acid and maleic acid, copolymers of acrylic acid and an ester of a monoethylenically unsaturated carboxylic acid, copolymers of methacrylic acid and an ester of a monoethylenically unsaturated carboxylic acid and alkali metal or ammonium salts of the copolymers specified.

8. A process as claimed in any of claims 1 to 7, wherein the molar mass of the polymers of component (a) is from 1000 to 10 000.

9. A process as claimed in any of claims 1 to 8, wherein the component (a) used comprises homopolymers of acrylic acid or methacrylic acid or copolymers of methacrylic acid and acrylic acid.

10. A process as claimed in any of claims 1 to 9, wherein the component (b) used comprises polyalkylene glycols which are end-capped at one end and have the formula
R¹-O-(CHR²-CHR³-O)ₙH (I)
or
R¹-O-(CH₂-CH₂-CH₂-CH₂-O)ₙ-H (II),
where
R¹ = C₁-C₅₀-alkyl,
R², R³ = H, methyl or ethyl and
n = 1 to 100.

11. A process as claimed in any of claims 1 to 10, wherein the compounds used in component (b) are methylpolyethylene glycols or methylpolyalkylene glycols comprising ethylene oxide and propylene oxide, in each case having molar masses of from 200 to 10 000.

## Revendications

1. Procédé de modification de polymères contenant des groupes acide au moyen de la réaction de
a) polymères contenant au moins 5 % en poids d'un monomère présentant des groupes acide insaturés et ayant des masses moléculaires allant de 200 à 100 000, avec des
b) polyalkylèneglycols coiffés unilatéralement par des groupes terminaux, des alkylpolylalylèneglycolamines ou des mélanges de ceux-ci ainsi que des mélanges d'au moins un des deux composés cités présentant jusqu'à 30 % en poids, par rapport aux mélanges, d'ammoniac, d'amines, d'alcools, d'acides hydroxycarboxyliques ou d'acides aminés
à des températures allant jusqu'à 250 °C, **caractérisé en ce que** l'on met en oeuvre des polymères en tant que composant (a) que l'on peut obtenir au moyen de la polymérisation amorcée par voie radicalaire d'acides à insaturation monoéthylénique d'un composé hydrosoluble du soufre, le soufre présentant le degré d'oxydation 4, éventuellement en présence d'autres monomères à insaturation monoéthylénique en solution aqueuse en présence d'au moins 4 % en poids, par rapport au monomères mis en oeuvre pour la polymérisation.

2. Procédé selon la revendication 1, **caractérisé en ce que** l'on met en oeuvre en tant que composés hydrosolubles du soufre, du dioxyde de soufre, de l'acide sulfureux, des sels des métaux alcalins, alcalino-terreux ou d'ammonium de l'acide sulfureux ou de l'acide disulfureux, du formaldéhydesulfoxylate de sodium, de potassium ou d'ammonium, des dialkylsulfites ou des mélanges de ceux-ci.

3. Procédé selon la revendication 1 ou 2, **caractérisé en ce que** l'on met en oeuvre en tant que composés hydrosolubles du soufre, le sulfite de sodium, de potassium ou d'ammonium, le disulfite de sodium, de potassium, de calcium ou d'ammonium, l'hydrogénosulfite de sodium, de potassium de calcium ou d'ammonium ou des mélanges de ceux-ci.

4. Procédé selon l'une quelconque des revendications 1 à 3, **caractérisé en ce que** l'on met en oeuvre les composés hydrosolubles du soufre dans des quantités allant de 4 à 15 % en poids, par rapport aux monomères utilisés pour la polymérisation.

5. Procédé selon l'une quelconque des revendications 1 à 4, **caractérisé en ce que** l'on met en oeuvre en tant que composés du composant (a), des homo- ou des copolymères de l'acide acrylique, de l'acide méthacrylique, de l'acide maléique, de l'anhydride maléique, de l'acide vinylsulfonique, de l'acide acrylamidométhylepropanesulfonique, de l'acide méthallylsulfonique ou les sels alcalins ou ammonium des monomères cités.

6. Procédé selon l'une quelconque des revendications 1 à 5, **caractérisé en ce que** l'on met en oeuvre en tant que composé du composant (a) des copolymères présentant de 5 à 95 % en poids d'acide acrylique, d'acide méthacrylique, d'acide maléique, de l'anhydride de l'acide maléique, de l'acide vinylsulfonique, de l'acide acrylamidométhylepropanesulfonique, de l'acide méthallylsulfonique et/ou leurs sels de métaux alcalins ou d'ammonium et 95 à 5 % en poids d'ester d'acide acrylique, d'acide méthacrylique ou d'acide maléique d'alcools monovalents présentant 1 à 8 atomes de C.

7. Procédé selon l'une quelconque des revendications 1 à 6, **caractérisé en ce que** l'on met en oeuvre en tant que composé du composant (a) des homopolymères de l'acide acrylique, des homopolymères de l'acide méthacrylique, des copolymères de l'acide acrylique et de l'acide méthacrylique, des copolymères de l'acide méthacrylique et de l'acide vinylsulfonique, des copolymères de l'acide acrylique et de l'acide maléique, des copolymères de l'acide méthacrylique et de l'acide maléique, des copolymères de l'acide acrylique et un ester d'un acide carboxylique à insaturation monoéthylénique ainsi que les sels des métaux alcalins ou de l'ammonium des copolymères cités.

8. Procédé selon l'une quelconque des revendications 1 à 7, **caractérisé en ce que** la masse moléculaire des polymères du composant (a) va de 1 000 à 10 000.

9. Procédé selon l'une quelconque des revendications 1 à 8, **caractérisé en ce que** l'on met en oeuvre en tant que composant (a) des homopolymères de l'acide acrylique ou de l'acide méthacrylique ou des copolymères de l'acide méthacrylique et de l'acide acrylique.

10. Procédé selon l'une quelconque des revendications 1 à 9, **caractérisé en ce que** l'on met en oeuvre en tant que composant (b) des polyalkylèneglycols coiffés unilatéralement par des groupes terminaux des formules
R¹-O-(CHR²-CHR³-O)ₙH (I)
ou
R¹-O-(CH₂-CH₂-CH₂-CH₂-O)ₙ-H (II)
dans lesquelles
R¹ = un alkyle en C₁ à C₅₀
R², R³ = H, méthyle ou éthyle et
n = 1 à 100.

11. Procédé selon l'une quelconque des revendications 1 à 10, **caractérisé en ce que** l'on met en oeuvre en tant que composés du composant (b) des méthylpolyéthylèneglycols ou des méthylpolyalkylèneglycols contenant des motifs oxyde d'éthylène ou oxyde de propylène présentant des masses moléculaires allant chacune de 200 à 10 000.
